# EUROPÄISCHE PATENTSCHRIFT

(11) **EP 2 754 942 B1**
(45) Veröffentlichungstag und Bekanntmachung des Hinweises auf die Patenterteilung: **27.02.2019**
(21) Anmeldenummer: 13193766.6
(22) Anmeldetag: 21.11.2013
(51) Int. Cl.: F16F 9/44, F16L 55/04

(54) **Pulsationsdämpfer**
Pulsation dampener
Amortisseur de pulsations

(30) Priorität: 11.01.2013 DE 102013000338
(43) Veröffentlichungstag der Anmeldung: 16.07.2014
(73) Patentinhaber: MANN + HUMMEL GMBH, 71636 Ludwigsburg (DE)
(72) Erfinder: Teschner, Dr. Matthias, 71636 Ludwigsburg (DE); Giagounidis, Panagiotis, 73728 Esslingen am Neckar (DE); Krempels, Helge, 71636 Ludwigsburg (DE); Herkommer, Siegfried, 74395 Mundelsheim (DE)

(56) Entgegenhaltungen:
- EP-A2- 1 085 249
- WO-A1-03/019025
- CH-A- 432 147
- DE-A1-102006 039 540
- DE-A1-102007 045 266
- US-A- 4 998 609

## Beschreibung

### Technisches Gebiet

Die Erfindung betrifft einen Pulsationsdämpfer zur Dämpfung von Druckpulsationen eines Fluides in einer Fluidleitung, wobei der Pulsationsdämpfer unter Ausbildung eines axialen Strömungskanals als Zwischenstück in die Fluidleitung einbringbar ist, und wobei der Pulsationsdämpfer ein Gehäuse aufweist. Der Pulsationsdämpfer ist besonders für die Anwendung in einem Motorölkreislauf einer Brennkraftmaschine, insbesondere eines Kraftfahrzeugs, geeignet.

### Stand der Technik

Zur Förderung von Fluiden kommen häufig Pumpen zum Einsatz. Viele Fluidpumpen, beispielsweise Flügelzellenpumpen, erzeugen hierbei insbesondere bei hohen Drehzahlen keinen konstanten Volumenstrom, sondern einen zeitlich veränderlichen Volumenstrom mit periodisch auftretenden Druckpulsationen. Solche Druckspitzen können der Pumpe nachgelagerte Komponenten beschädigen. Dieses Problem besteht beispielsweise in industriellen Prozessanlagen oder auch in Fluidkreisläufen von Brennkraftmaschinen, beispielsweise einem Motorölkreislauf einer Brennkraftmaschine, insbesondere eines Kraftfahrzeugs.

Zur Verringerung von Druckpulsationen sind aus dem Stand der Technik verschiedenartige Pulsationsdämpfer bekannt, beispielsweise Absorptionsdämpfer, elektrisch betriebene aktive Dämpfer, oder Reflexions- bzw. Interferenzdämpfer. Ein Interferenzdämpfer in Form eines Reihenresonators ist beispielsweise in der Offenlegungsschrift DE 10 2010 050 928 A1 beschrieben. Interferenzdämpfer mit Reihenresonatoren weisen einen oder mehrere Resonatoren auf, welche derart in die fluidführende Leitung eingebracht sind, dass mindestens ein Querschnittssprung entsteht. Hierdurch werden Druckpulse reflektiert und Dämpfung wird durch destruktive Interferenz zwischen den reflektierten Druckpulsen und nachfolgenden Druckpulsen erzielt. Ein Querschnittssprung in der fluidführenden Leitung geht jedoch stets mit einem Druckverlust einher.

Zur Dämpfung unerwünschter Geräusche sind Schalldämpfer mit einem elastischen Dämpfungsglied bekannt, beispielsweise aus der CH432147.

Ein Vibrationsdämpfer für hydraulische Kupplungsantriebe ist beispielsweise in der Patentschrift US 4,998,609 und der Offenlegungsschrift WO 03/019025 A1 beschrieben.

Auch in der EP 1085249 A2 ist ein hydraulischer Dämpfer beschrieben, welcher einen Querschnittssprung in der Fluidführung aufweist. Ein Kolben mit einer Bohrung ist derart verschiebbar zwischen zwei fluidführenden Kammern in einem Zylinder angeordnet, dass er bei erhöhtem Fluiddruck in Richtung der Kammer mit geringerem Druck verschiebbar ist und hierbei einen Bypass der Bohrung am Außendurchmesser des Kolbens für den Fluidfluss freigibt.

Der Erfindung liegt die Aufgabe zugrunde, einen Pulsationsdämpfer anzugeben, welcher Druckpulsationen eines Fluides zuverlässig dämpft ohne einen Druckverlust zu bewirken. Weiterhin sind ein entsprechendes Verfahren zur Pulsationsdämpfung und ein Ölmodul mit einem entsprechenden Pulsationsdämpfer anzugeben.

### Offenbarung der Erfindung

Die Aufgabe wird für einen Pulsationsdämpfer der eingangs genannten Art dadurch gelöst, dass das Gehäuse über mindestens einen mit dem Strömungskanal kommunizierenden Hohlraum verfügt, in welchem mindestens ein Dämpfungsglied in axialer Richtung verschiebbar angeordnet ist. Das Dämpfungsglied ist hierbei rein mechanisch durch die Druckpulsationen verschiebbar. Die Zufuhr elektrischer Energie ist nicht erforderlich. Hierdurch ist der Pulsationsdämpfer besonders zuverlässig und kostengünstig im Betrieb. Durch das Verschieben des Dämpfungsgliedes wird mechanische Arbeit verrichtet und hydraulische Energie in kinetische Energie umgewandelt. Da der Volumenstrom konstant ist geht die Reduzierung der hydraulischen Energie mit einer Reduzierung des Drucks einher. Die Druckpulsationen werden somit gedämpft. Auf Grund des verschiebbaren Dämpfungsgliedes kann man auch von einem dynamischen Pulsationsdämpfer oder einem dynamischen Druckspitzendämpfer sprechen.

Die Länge des Dämpfungsglieds in axialer Richtung ist derart geringer als eine Länge des Hohlraums, dass in axialer Richtung ein Spalt zwischen dem Gehäuse und dem Dämpfungsglied ausgebildet ist. In einer Ruhelage des Dämpfungsglieds befindet sich hierbei ein erster Spalt in axialer Richtung stromauf und ein zweiter Spalt stromab des Dämpfungsglieds. Das Dämpfungsglied kann eine beliebige Formgebung besitzen, verfügt jedoch stets über je eine stromauf und stromab gerichtete Stirnfläche, auf welche der Fluiddruck wirken kann. Tritt ein Druckpuls auf, führt die Druckdifferenz zwischen erstem Spalt und zweitem Spalt zu einer axialen Verschiebung des Dämpfungsglieds in Strömungsrichtung. Der erste Spalt und der zweite Spalt weisen vorzugsweise eine Breite auf, welche einen Verschiebungsweg des Dämpfungsglieds zumindest um ein Zweifaches, bevorzugt um ein Fünffaches, übersteigt. Die Spaltbreite beträgt vorzugsweise jeweils höchstens einige Millimeter, besonders bevorzugt höchstens 1mm. Die Spaltbreiten können derart gewählt werden, dass das Dämpfungsglied in seiner axialen Bewegung nicht gehindert wird, d.h. die Summe der Spaltbreiten ist größer als der Verschiebungsweg des Dämpfungsglieds. Auf diese Weise ist eine optimale Dämpfungswirkung erzielbar.

In einer vorteilhaften Ausgestaltung ist ein Außendurchmesser des Dämpfungsglieds zumindest abschnittsweise im Wesentlichen gleich einem Innendurchmesser des Hohlraums. Hierdurch wird die Ausbildung eines Bypasses des Strömungskanals verhindert, was zu einem Druckausgleich im Strömungskanal führen und eine Dämpfung behindern würde. Der Außendurchmesser des Dämpfungsglieds kann nur abschnittsweise, beispielsweise nur an einer Stelle, im Wesentlichen gleich dem Innendurchmesser des Hohlraumes sein, oder über die gesamte Länge. Unter einem im Wesentlichen gleichen Durchmesser ist hierbei zu verstehen, dass einerseits keine Formpassung besteht, sodass das Dämpfungsglied innerhalb des Hohlraums in axialer Richtung beweglich ist, und dass andererseits geringstmögliches radiales Spiel besteht, sodass die Ausbildung eines Spalts verhindert wird, welcher als Bypass für das Fluid wirken würde.

Der Hohlraum und das Dämpfungsglied umschließen den Strömungskanal koaxial. Beispielsweise ist der Hohlraum zylindrisch oder quaderförmig. Das Dämpfungsglied ist dann entsprechend als Zylinder oder Quader ausgebildet und weist entlang seiner Mittelachse eine zylindrische Aussparung auf, welche den Strömungskanal ausbildet.

Das Dämpfungsglied bildet den Strömungskanal mit. Der Strömungskanal weist einen im Wesentlichen konstanten Querschnitt auf. Ein konstanter Querschnitt bietet den Vorteil, dass keine Druckverluste auf Grund von Querschnittsprüngen auftreten.

Das Dämpfungsglied kann aus einem Material mit einer hohen Dichte, insbesondere Metall, bevorzugt Stahl, bestehen.

Vorteilhaft kann ein elastisches Element, insbesondere ein federndes Element, vorgesehen sein, welches auf das Dämpfungsglied eine Kraft in axialer Richtung entgegen der Strömungsrichtung des Fluids ausübt. Das federnde Element kann eine beliebige Druckfeder sein, welche an dem Gehäuse oder an dem Dämpfungsglied angeordnet oder angeformt sein kann. Das Dämpfungsglied kann auch zumindest abschnittsweise aus einem elastischen oder federnden Material gefertigt sein.

Vorteilhaft ist in dem Hohlraum ein Abstandselement vorgesehen, welches die Mindestbreite eines Spalts zwischen dem Dämpfungsglied und einer den Hohlraum in axialer Richtung stromauf begrenzenden Wandung definiert. Durch das Abstandselement ist gewährleistet, dass stets ein Spalt zwischen dem Dämpfungsglied und dem Gehäuse vorhanden ist. Hierdurch ist sichergestellt, dass die Druckpulsationen Kraft auf das Dämpfungsglied ausüben können und somit eine zuverlässige Verschiebung des Dämpfungsglieds stattfindet. Besonders vorteilhaft ist ein stromauf angeordnetes Abstandselement in Kombination mit einem stromab angeordneten elastischen Element. Das Abstandselement kann Teil des Gehäuses oder des Dämpfungsglieds oder ein separates Bauteil sein.

Der Hohlraum und das Dämpfungsglied können einen ersten Abschnitt mit einem ersten Außendurchmesser und einen zweiten Abschnitt mit einem zweiten Außendurchmesser aufweisen, wobei der zweite Abschnitt stromab des ersten Abschnitts angeordnet ist und wobei der zweite Außendurchmesser geringer als der erste Außendurchmesser ist. Hierdurch sind stromab des Dämpfungsglieds zwei Spalten gebildet, von welchen nur einer mit dem Strömungskanal kommuniziert. Die Stirnfläche zu diesem Spalt kann als aktive Fläche bezeichnet werden, da auf diese der Fluiddruck einwirkt. Die stromauf gerichtete Stirnfläche des Dämpfungsglieds und die aktive Fläche stromab weisen unterschiedliche Querschnittsflächen auf. Hierdurch kann der Dämpfungseffekt verstärkt werden. Die Breite der beiden stromab gebildeten Spalten kann gleich sein. In dem nicht mit dem Strömungskanal in Verbindung stehenden Spalt kann vorteilhaft das elastische Element angeordnet sein.

Das Dämpfungsglied besteht aus mindestens zwei Segmenten, welche in axialer Richtung hintereinander in den Hohlraum eingebracht sind. Zwischen den einzelnen Segmenten besteht eine spaltfreie Verbindung.

Die Aufgabe wird weiterhin gelöst durch ein Ölmodul zum Einbringen in einen Ölkreislauf einer Brennkraftmaschine, insbesondere eines Kraftfahrzeugs, mit mindestens einem Ölfilter, wobei mindestens ein erfindungsgemäßer Pulsationsdämpfer in das Ölmodul integriert ist. Der Pulsationsdämpfer ist als Zwischenstück in die ölführende Leitung einbringbar und bildet einen axialen Strömungskanal aus. Der Pulsationsdämpfer weist ein Gehäuse auf, welches über mindestens einen mit dem Strömungskanal kommunizierenden Hohlraum verfügt, in welchem mindestens ein Dämpfungsglied in axialer Richtung verschiebbar angeordnet ist. Vorteilhafte Ausgestaltungen des Pulsationsdämpfers wurden bereits ausgeführt und gelten auch im Zusammenhang mit dem Ölmodul.

Die Aufgabe wird weiterhin gelöst durch ein Verfahren zur Dämpfung von Druckpulsationen eines Fluids in einer Fluidleitung, wobei ein bewegliches Dämpfungsglied derart in das Fluid eingebracht wird, dass hydraulische Energie in kinetische Energie und die kinetische Energie in Dissipationsenergie umgewandelt wird. Die Dissipationsenergie steht dem Fluid nicht mehr als hydraulische Energie zur Verfügung. Bei konstantem Volumenstrom wird somit der Druck reduziert bzw. Druckspitzen gedämpft. Vorteilhaft wird das Dämpfungsglied in ein Gehäuse eingebracht, welches unter Ausbildung eines Strömungskanals für das Fluid als Zwischenstück in die Fluidleitung eingebracht wird. Vorteilhaft wird das Dämpfungsglied derart angeordnet, dass es durch einen Druckpuls von einer ersten Position in eine zweite Position verschoben wird. Vorzugsweise wird das Dämpfungsglied vor einem nachfolgenden Puls wieder in seine Ausgangsposition zurück verschoben.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnungen näher erläutert werden. Der Fachmann wird die in den Zeichnungen, der Beschreibung und den Ansprüchen in Kombination offenbarten Merkmale zweckmäßigerweise auch einzeln betrachten und zu sinnvollen weiteren Kombinationen zusammenfassen. Es zeigen schematisch
- Figur 1a: einen Pulsationsdämpfer gemäß einem ersten Ausführungsbeispiel in einer Schnittdarstellung;
- Figur 1b: einen Ausschnitt A des Pulsationsdämpfers gemäß Fig. 1a;
- Figur 2: zeitlicher Verlauf eines Druckpulses mit Phasenverschiebung zwischen Stirnfläche des Dämpfungsglieds stromauf und Stirnfläche stromab;
- Figur 3a: einen Pulsationsdämpfer gemäß eine nicht erfindungsgemäßen Ausgestaltungsform in einer Schnittdarstellung;
- Figur 3b: einen Pulsationsdämpfer gemäß Fig.3a in einer perspektivischen Darstellung.

In den Figuren sind gleiche Bauteile mit gleichen Bezugszeichen versehen.

### Ausführungsform(en) der Erfindung

Im Folgenden wird die Erfindung am Beispiel eines Motorölkreislaufs in einem Kraftfahrzeug erläutert. Der Pulsationsdämpfer 1 ist stromab einer Ölpumpe in die Motorölleitung einbringbar. Hierbei sind die von der Ölpumpe zur Förderung des Motoröls hervorgerufenen Druckspitzen zu dämpfen. Der Pulsationsdämpfer 1 ist jedoch ebenso für andere Fluide und andere Anwendungen, in welchen Druckpulsationen auftreten und zu dämpfen sind, geeignet.

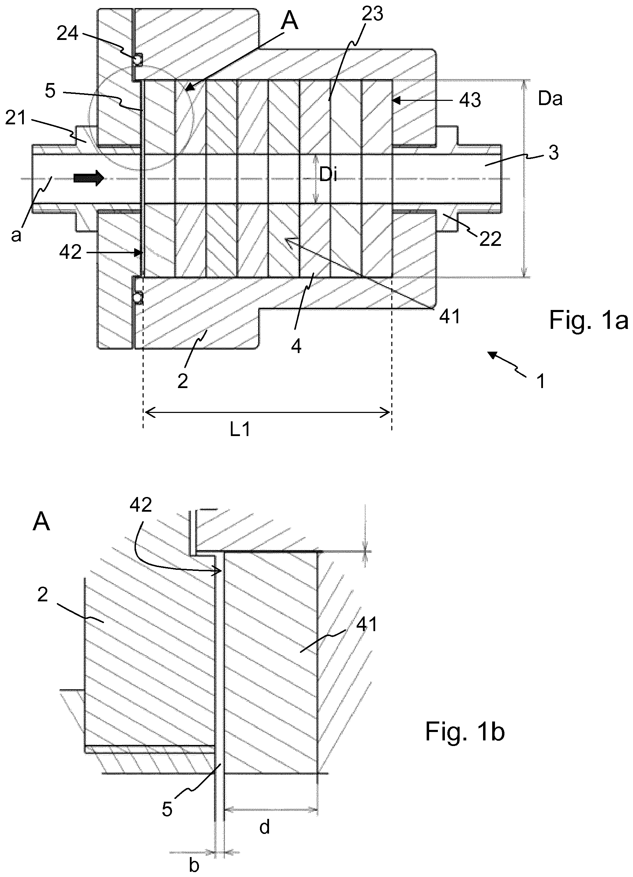

Fig. 1a zeigt einen Pulsationsdämpfer 1 gemäß einer ersten Ausgestaltung in einer Schnittdarstellung. Der Pulsationsdämpfer 1 weist ein um eine Achse a rotationssymmetrisches Gehäuse 2 auf, welches als Zwischenstück in eine fluidführende Leitung einbringbar ist. Die Anschlussstücke 21, 22 an die fluidführende Leitung weisen hierbei den gleichen Innendurchmesser auf wie die fluidführende Leitung. Das Gehäuse 2 ist metallisch, beispielsweise aus Aluminium. In dem Gehäuse 2 ist ein Hohlraum 23 ausgebildet. Der Hohlraum 23 ist von zylindrischer Gestalt.

In dem Hohlraum 23 ist ein Dämpfungsglied 4 angeordnet, welches eine Mehrzahl an Segmenten 41 aufweist. In diesem Ausführungsbeispiel handelt es sich um acht Segmente 41. In anderen Ausgestaltungen kann jedoch auch eine andere Anzahl an Segmenten 41 für das mehrsegmentige Dämpfungsglied 4 vorgesehen sein. Die Segmente 41 des Dämpfungsglieds 4 sind jeweils scheibenförmig und besitzen alle den gleichen Außendurchmesser Da und den gleichen Innendurchmesser Di. Vorzugsweise ist auch die Dicke d, also die Abmessung in axialer Richtung, identisch. Die Segmente 41 ergänzen sich zu einem Dämpfungsglied 4 mit der Länge L1. Die Segmente 41 sind aus einem Material mit einer hohen Dichte gefertigt, insbesondere einem Metall, beispielsweise Stahl oder Aluminium.

Das Dämpfungsglied 4 bildet zusammen mit den Anschlussstücken 21, 22 einen Strömungskanal 3 für das Fluid. Der Strömungskanal 3 verläuft entlang einer Mittelachse des Dämpfungsglieds 4, welche gleich der Achse a des Gehäuses 2 ist. Das Gehäuse 2 umgibt das Dämpfungsglied 4 und den Strömungskanal 3 koaxial. Die Strömungsrichtung des Fluids ist durch einen Pfeil dargestellt.

Der Innendurchmesser Di des zylindrischen Dämpfungsglieds 4 ist konstant und entspricht dem Innendurchmesser der Anschlussstücke 21, 22 und der fluidführenden Leitung. Hierdurch bleiben die strömungsführenden Querschnitte konstant, sodass durch den Pulsationsdämpfer 1 kein Druckverlust in der fluidführenden Leitung hervorgerufen wird.

Der Außendurchmesser Da des zylindrischen Dämpfungsglieds 4 entspricht im Wesentlichen dem Durchmesser des Hohlraums 23. Das Dämpfungsglied 4 ist mit geringstmöglichem Spiel in radialer Richtung in das Gehäuse 2 eingepasst. Hierdurch ist eine Bewegung des Dämpfungsglieds 4 in axialer Richtung möglich, jedoch kein Bypass für das Fluid gebildet. Das Fluid strömt ausschließlich durch den Strömungskanal 3 von einer Stelle stromauf des Dämpfungsglieds 4 zu einer Stelle stromab des Dämpfungsglieds 4.

Der Hohlraum 23 besitzt beispielsweise eine Länge zwischen 20 und 100 mm, beispielsweise ca. 50 mm, und einen Durchmesser zwischen 20 und 60 mm, beispielsweise ca. 40 mm. Der Dämpfungseffekt ist von Länge und Durchmesser des Hohlraums abhängig.

Das Dämpfungsglied 4 weist in axialer Richtung eine stromauf gerichtete Stirnfläche 42 und eine stromab gerichtete Stirnfläche 43 auf, welche jeweils einer den Hohlraum 23 begrenzenden Wandung des Gehäuses 2 zugewandt sind. Die Stirnflächen 42, 43 sind orthogonal zu der Mittelachse a des Strömungskanals 3. In der dargestellten Momentaufnahme liegt die stromab gerichtete Stirnfläche 43 des Dämpfungsglieds 4 an der Wandung des Gehäuses 2 an. Zwischen der stromauf gerichteten Stirnfläche 42 und der Wandung des Gehäuses 2 ist ein Spalt 5 mit Spaltmaß b ausgebildet, wie in Fig. 1b, welche den Ausschnitt A aus Fig. 1a im Detail zeigt, dargestellt ist.

Das Fluid kann in den Spalt 5 eindringen. Das Spaltmaß b ist in Abhängigkeit der Dimensionierung der Elemente des Pulsationsdämpfers 1 und dessen Leistung zu wählen. Das Spaltmaß b ist so gering zu wählen, dass die Strömung durch den Spalt 5 nicht gestört wird und kein nennenswerter Druckverlust durch Strömungsumlenkung auftritt. Andererseits ist das Spaltmaß b ausreichend groß zu wählen um zu gewährleisten, dass der Druck des Fluids auf die Stirnfläche 42 wirken kann. Vorzugsweise übersteigt das Spaltmaß b weiterhin einen Verschiebungsweg des Dämpfungsglieds 4. Unter dem Verschiebungsweg ist die Strecke zu verstehen, um welche das Dämpfungsglied bei Vorliegen einer Druckdifferenz an den beiden Stirnflächen 42, 43, verschoben wird. Dadurch ist das Dämpfungsglied 4 in dem Hohlraum 23 verschiebbar, ohne dass die Stirnflächen 42, 43 an die Wandungen des Gehäuses 2 anstoßen. Hierdurch ist gewährleistet, dass dem Dämpfungsglied 4 eine ausreichend lange Strecke für die axiale Verschiebung zur Verfügung steht, d.h. die durch die Druckpulse hervorgerufene Verschiebung nicht durch Anstoßen gehindert wird. Vorzugsweise beträgt das Spaltmaß b ein Vielfaches, beispielsweise ein Zehnfaches, des Verschiebungswegs des Dämpfungsglieds 4. Bei einer durchschnittlichen Verschiebung des Dämpfungsglieds 4 um 0,1mm beträgt das Spaltmaß beispielsweise b=1mm.

Das Gehäuse 2 ist mehrteilig. Der zwischen den Gehäuseteilen bestehende Spalt ist mit einem Dichtelement 24 abgedichtet, sodass kein Fluid nach außen dringen kann. Auf das Dichtelement 24 kann verzichtet werden, wenn die Gehäuseteile anderweitig fluiddicht miteinander verbunden sind.

Auf Grund der konzentrischen Anordnung von Strömungskanal, Dämpfungsglied 4 und Gehäuse 2 erfolgt ein radialer Kräfteausgleich, sodass der Pulsationsdämpfer 1 nahezu verschleißfrei arbeitet.

Die Wirkweise des Pulsationsdämpfers wird nun an Hand eines Beispiels erläutert. Ein beispielhafter Druckverlauf einer Motoröl fördernden Flügelzellenpumpe weist bei einer Pumpendrehzahl von 5000 Umdrehungen pro Minute und einem Systemdruck von 3 bar Druckpulsationen mit einer Periode von ca. 575 Hz und einer Amplitude von ca. 40 bar auf. Die Druckpulsationen breiten sich mit der Schallgeschwindigkeit in dem entsprechenden Fluid aus. An zwei voneinander beabstandeten Stellen in der Fluidleitung liegen zu einem bestimmten Zeitpunkt daher unterschiedliche Druckniveaus vor. Dies wird bei dem erfindungsgemäßen dynamischen Pulsationsdämpfer zur Erzielung einer Dämpfung der Druckspitzen ausgenutzt.

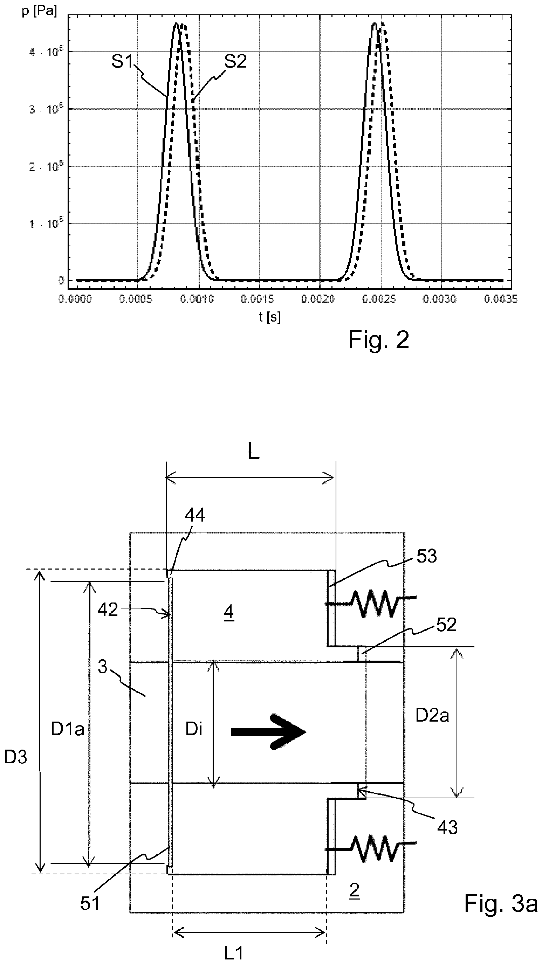

Die Fig. 2 zeigt ein beispielhaftes Druck-Zeit-Diagramm ohne Dämpfung. Die beiden Kurven stellen den Druckverlauf an unterschiedlichen Stellen im Strömungskanal 3 dar. In einer durchgezogenen Linie S1 ist der Druckverlauf an der stromauf gerichteten Stirnfläche 42 und in einer gestrichelten Linie S2 der Druckverlauf an der stromab gerichteten Stirnfläche 43 dargestellt. Die beiden Stirnflächen 42, 43 des Dämpfungsglieds 4 sind voneinander um die Strecke L1=80mm beabstandet, was der Erstreckung des Dämpfungsglieds 4 in axialer Richtung entspricht.

Durch die Druckpulsationen wirkt eine zeitlich veränderliche Druckkraft auf die Stirnflächen 42, 43 des Dämpfungsglieds 4. An der stromab gerichteten Stirnfläche 43 tritt ein Puls ca. 0,1 ms später auf als an der stromauf gerichteten Stirnfläche 42. Zum Zeitpunkt des Druckmaximums mit ca. 45 bar an der ersten Stelle liegt an der zweiten Stelle ein Druck von ca. 35 bar vor. Die Druckdifferenz zwischen den beiden Stellen bezogen auf das Druckmaximum beträgt ca. 22% ohne Berücksichtigung der eigentlichen Dämpfung.

Durch die zu einem bestimmten Zeitpunkt vorliegende Druckdifferenz wirken unterschiedliche Kräfte auf die beiden Stirnflächen 42, 43. Dies führt zu einer Verschiebung des Dämpfungsglieds 4 in axialer Richtung in Strömungsrichtung. Nach einer Verschiebung um eine bestimmte Strecke in Strömungsrichtung wird das Dämpfungsglied 4 wieder zurück in die Ausgangsposition geschoben und kann erneut dämpfend auf den nachfolgenden Druckpuls wirken. Um eine optimale Dämpfungswirkung zu erreichen sind die Abmessungen von Dämpfungsglied und Hohlraum, sowie die Masse des Dämpfungsglieds 4 derart aufeinander abgestimmt, dass ein Verschieben des Dämpfungsglieds 4 in Strömungsrichtung und ein Verschieben zurück in die Ausgangsposition in der Zeit zwischen zwei aufeinander folgenden Druckpulsen geschehen kann.

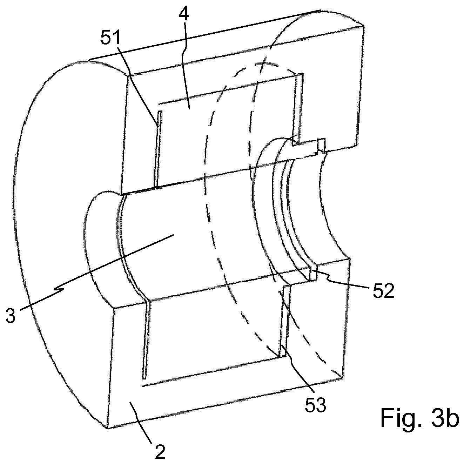

Fig. 3a zeigt einen nicht erfindungsgemäßen Pulsationsdämpfer 1 mit einem einsegmentigen Dämpfungsglied 4 in einer schematischen Schnittdarstellung. Fig. 3b zeigt eine perspektivische Darstellung des Pulsationsdämpfers 1 aus Fig. 3a in derselben Schnittebene. Gehäuse 2 und Dämpfungsglied 4 bilden einen Strömungskanal 3 für das Fluid mit konstantem Innendurchmesser Di aus.

Zwischen der stromauf gerichteten Stirnfläche 42 und der Wandung des Hohlraums 23 ist ein Spalt 51 in Form eines Ringspalts mit einem ersten Außendurchmesser D1a ausgebildet. Die Spaltbreite des Spalts 51 ist durch ein Abstandselement 44 am Dämpfungsglied 4 vordefiniert. Wird das Dämpfungsglied 4 in axialer Richtung stromaufwärts bewegt, stellt das Abstandselement 44 sicher, dass ein Spalt 51 mit einer durch die Höhe des Abstandselements 44 definierten Mindestspaltbreite zwischen der stromauf gerichteten Stirnfläche 42 und der Wandung des Gehäuses 2 verbleibt. Hierdurch wird sichergestellt, dass ein Druckpuls auf die Stirnfläche 42 wirken und eine Kraft auf diese ausüben kann. Das Abstandselement 44 kann alternativ auch am Gehäuse 2 befestigt oder ein Teil der Wandung sein.

Der Hohlraum 23 weist stromaufwärts eine Stufe auf. Hierdurch sind zwei zylindrische Abschnitte mit verschiedenen Durchmessern gebildet. Das Dämpfungsglied 4 ist in seiner Außenkontur entsprechend angepasst, sodass geringstmögliches radiales Spiel besteht. Der erste Abschnitt des Hohlraums 23 und des Dämpfungsglieds 4 besitzen einen Außendurchmesser D3, welcher geringfügig größer ist als der erste Außendurchmesser D1a des Spalts 51 an der stromauf gerichteten Stirnfläche 42. Der stromab des ersten Abschnitts angeordnete zweite Abschnitt des Hohlraums 23 und der zweite Abschnitt des Dämpfungsglieds 4 besitzen einen zweiten Außendurchmesser D2a. Der zweite Außendurchmesser D2a ist geringer als der Außendurchmesser D3. Durch die Stufe sind stromab des Dämpfungsglieds 4 zwei Spalten 52, 53 zwischen dem Dämpfungsglied 4 und der den Hohlraum 23 begrenzenden Wandung ausgebildet. Der erste Spalt 53 mit dem größeren Außendurchmesser D3 steht nicht in kommunizierender Verbindung mit dem Fluid. Der zweite Spalt 52 mit dem geringeren Außendurchmesser D2a kommuniziert mit dem Strömungskanal 3, d.h. der Druck des Fluids wirkt nur auf die Stirnfläche 43 des zweiten Abschnitts des Dämpfungsglieds 4. Die stromab gerichtete Stirnfläche 43 des Dämpfungsglieds 4 ist somit geringer als die stromauf gerichtete Stirnfläche 42 des Dämpfungsglieds 4.

Die unterschiedlichen Außendurchmesser D1a und D2a, bzw. die unterschiedlichen wirksamen Stirnflächen 42, 43 des Dämpfungsglieds 4 bewirken eine verbesserte Dämpfung. Dadurch kann die Länge L des Hohlraums 23 gegenüber der Ausgestaltung gemäß Fig. 1 mit gleichem Außendurchmesser der Spalte stromauf und stromab des Dämpfungsglieds 4 verringert werden, um die gleiche Dämpfung zu erzielen.

Um auch bei einer verringerten Querschnittsfläche der stromab gerichteten Stirnfläche 43 zu gewährleisten, dass eine Rückstellkraft auf das Dämpfungsglied 4 wirkt, welche ausreicht um das Dämpfungsglied 4 nach einer axialen Verschiebung stromabwärts wieder in eine Ausgangsposition stromaufwärts zu verschieben, ist ein hier schematisch dargestelltes federndes Element 6 vorgesehen. Das federnde Element 6 ist in dem Spalt 53 zwischen erstem Abschnitt des Dämpfungsglieds 4 und dem Gehäuse 2 angeordnet. Beispielsweise ist das federnde Element 6 eine Druckfeder.

Das federnde Element 6 drückt das Dämpfungsglied 4 unter Vorspannung in axialer Richtung stromauf gegen die den Hohlraum 23 begrenzende Wandung. Durch das Abstandselement 44 ist dennoch ein Spalt 51 vorhanden. Die axiale Verschiebung des Dämpfungsglieds 4 in Strömungsrichtung beim Auftreten eines Druckpulses erfolgt gegen die Federkraft, sodass eine entsprechende Rückstellkraft dazu führt, dass das Dämpfungsglied 4 nach der druckbedingten Verschiebung wieder in seine Ausgangsposition verschoben wird. Die Federkonstante des federnden Elements 6 ist vorzugsweise relativ schwach und nur so groß, dass die Federkraft gerade ausreicht, das Dämpfungsglied 4 zurück in seine Ausgangsposition zu verschieben. Die Federkonstante kann zur Erzielung der gewünschten Dämpfung an das System angepasst werden.

Unter anderem sind folgende nicht dargestellten Varianten des erfindungsgemäßen Pulsationsdämpfers möglich.

Ein Abstandselement zur Vorgabe einer Mindestspaltbreite des Spalts 5 kann auch in der in Fig. 1a dargestellten Variante des Pulsationsdämpfers vorgesehen sein.

An Stelle einer zylindrischen Form sind auch beliebige andere Formen für den Hohlraum und das Dämpfungsglied möglich. Auf Grund des radialen Kräfteausgleichs bei entsprechender Anordnung relativ zur Strömungsachse sind insbesondere andere rotationssymmetrische oder achsensymmetrische Formen vorteilhaft, beispielsweise eine Quaderform.

Das federnde Element kann auch nur ein elastisches Element sein. Das federnde oder elastische Element kann auch in das Dämpfungsglied integriert sein. Hierzu kann das Dämpfungsglied abschnittsweise, insbesondere im Bereich der stromab gerichteten Stirnfläche, aus einem elastischen, insbesondere federnden, Material ausgebildet sein. Auch in einer Ausgestaltung mit gleichen Außendurchmessern der Spalte kann ein federndes oder elastisches Element vorgesehen sein. Weiterhin ist auch eine Variante nur mit Abstandselement ohne elastisches Element oder nur mit elastischem Element ohne Abstandselement möglich.

Das Gehäuse des Pulsationsdämpfers kann auch aus Kunststoff gefertigt sein. Weiterhin kann das Gehäuse einstückig gebildet sein. Die Anschlusselemente können ebenfalls einstückig mit dem übrigen Gehäuse ausgebildet sein.

Es ist weiterhin denkbar zwei oder mehr Pulsationsdämpfer in Serie in den Ölkreislauf einzubringen, sodass das Öl nacheinander durch mehrere Pulsationsdämpfer strömt. Dies ist insbesondere dann vorteilhaft, wenn der für einen Pulsationsdämpfer zur Verfügung stehende Bauraum begrenzt ist, jedoch an einer anderen Stelle noch Bauraum zur Verfügung steht. Beispielsweise können an Stelle eines langen Pulsationsdämpfers zwei kürzere Pulsationsdämpfer eingesetzt werden.

Der mindestens eine Pulsationsdämpfer kann vorteilhaft in ein Ölmodul eines Ölkreislaufs einer Brennkraftmaschine integriert sein. Ölmodule vereinen meist mehrere Funktionen, beispielsweise Filtration, Öldruckregelung und Kühlung. Ein Ölmodul umfasst zumindest ein Filterelement zur Ölfiltration, welches in ein druck- und temperaturfestes Gehäuse eingebracht ist. Das Gehäuse ist in der Regel aus Stahl oder Aluminium und mit dem Motor verbindbar. Vorteilhaft ist der Pulsationsdämpfer vor dem Filterelement in die fluidführende Leitung eingebracht. Durch die Integration des Pulsationsdämpfers in das Ölmodul ist keine separate Montage des Pulsationsdämpfers erforderlich, was Montagezeit und Kosten spart. Der Pulsationsdämpfer kann vollständig oder teilweise in das Gehäuse des Ölmoduls eingebracht sein.

## Patentansprüche

1. Pulsationsdämpfer (1) zur Dämpfung von Druckpulsationen eines Fluides in einer Fluidleitung, wobei der Pulsationsdämpfer (1) unter Ausbildung eines axialen Strömungskanals (3) als Zwischenstück in die Fluidleitung eingebracht ist, und wobei der Pulsationsdämpfer (1) ein Gehäuse (2) und Anschlussstücken (21, 22) aufweist, wobei das Gehäuse (2) mindestens einen mit dem Strömungskanal (3) kommunizierenden Hohlraum (23) aufweist, in welchem mindestens ein Dämpfungsglied (4) in axialer Richtung verschiebbar angeordnet ist, so dass das Dämpfungsglied (4) während des Betriebs in axialer Richtung beweglich angeordnet ist, J 2. wobei der Hohlraum (23) und das Dämpfungsglied (4) den Strömungskanal (3) koaxial umschließen, wobei das Dämpfungsglied (4) den Strömungskanal (3) mit bildet und der Strömungskanal (3) eine im Wesentlichen konstante Querschnittsfläche aufweist, wobei das Dämpfungsglied (4) aus mindestens zwei Segmenten (41) besteht, welche in axialer Richtung hintereinander in den Hohlraum (23) eingebracht sind, wobei das Dämpfungsglied (4) zusammen mit den Anschlussstücken (21, 22) einen Strömungskanal (3) für das Fluid bildet, wobei der Strömungskanal (3) entlang einer Mittelachse des Dämpfungsglieds (4) verläuft, wobei die Mittelachse gleich der Achse (a) des Gehäuses (2) ist, wobei das Gehäuse (2) das Dämpfungsglied (4) und den Strömungskanal (3) koaxial umgibt, wobei der Innendurchmesser Di des zylindrischen Dämpfungsglieds (4) konstant ist und dem Innendurchmesser der Anschlussstücke (21, 22) und der fluidführenden Leitung entspricht.

2. Pulsationsdämpfer (1) nach Anspruch 1, **dadurch gekennzeichnet, dass** ein Außendurchmesser (Da, D1a, D2a) des Dämpfungsglieds (4) zumindest abschnittsweise im Wesentlichen gleich einem Durchmesser des Hohlraums (23) ist.

3. Pulsationsdämpfer (1) nach einem der vorigen Ansprüche, **dadurch gekennzeichnet, dass** das Dämpfungsglied (4) aus einem Material mit einer hohen Dichte, insbesondere Metall, bevorzugt Stahl, besteht.

4. Pulsationsdämpfer (1) nach einem der vorigen Ansprüche, **dadurch gekennzeichnet, dass** ein elastisches Element, insbesondere ein federndes Element (6), vorgesehen ist, welches auf das Dämpfungsglied (4) eine Kraft in axialer Richtung entgegen der Strömungsrichtung des Fluids ausübt.

5. Pulsationsdämpfer (1) nach einem der vorigen Ansprüche, **dadurch gekennzeichnet, dass** in dem Hohlraum (23) ein Abstandselement (44) vorgesehen ist, welches die Einhaltung eines Spalts (5, 51) zwischen dem Dämpfungsglied (4) und einer den Hohlraum (23) in axialer Richtung stromauf begrenzenden Wandung gewährleistet.

6. Pulsationsdämpfer (1) nach einem der vorigen Ansprüche, **dadurch gekennzeichnet, dass** der Hohlraum (23) und das Dämpfungsglied (4) einen ersten Abschnitt mit einem ersten Außendurchmesser (D3) und einen zweiten Abschnitt mit einem zweiten Außendurchmesser (D2a) aufweisen, wobei der zweite Abschnitt stromab des ersten Abschnitts angeordnet ist und wobei der zweite Außendurchmesser (D2a) geringer als der erste Außendurchmesser (D3) ist.

7. Pulsationsdämpfer (1) nach dem vorigen Anspruch, **dadurch gekennzeichnet, dass** eine Breite eines zwischen dem ersten Abschnitt des Dämpfungsglieds (4) und einer den ersten Abschnitt des Hohlraums in axialer Richtung begrenzenden Wandfläche ausgebildeten Spalts (53) im Wesentlichen gleich einer Breite eines zwischen dem zweiten Abschnitt des Dämpfungsglieds (4) und einer den zweiten Abschnitts des Hohlraum (23) in axialer Richtung begrenzenden Wandfläche ausgebildeten Spalts (52) ist.

8. Ölmodul zum Einbringen in einen Ölkreislauf einer Brennkraftmaschine, insbesondere eines Kraftfahrzeugs, mit mindestens einem Ölfilter, **dadurch gekennzeichnet, dass** das Ölmodul mindestens einen Pulsationsdämpfer (1) nach einem oder mehreren der vorigen Ansprüche aufweist.

9. Verfahren zur Dämpfung von Druckpulsationen eines Fluids in einer Fluidleitung, wobei ein bewegliches Dämpfungsglied (4) derart in das Fluid eingebracht wird, dass hydraulische Energie in kinetische Energie und die kinetische Energie in Dissipationsenergie umgewandelt wird, wobei ein Pulsationsdämpfer (1) nach einem der vorigen Ansprüche benutzt wird.

## Claims

1. Pulsation damper (1) for absorbing pressure pulsations of a fluid in a fluid duct, wherein the pulsation damper (1) is introduced as intermediate piece into the fluid duct by forming an axial flow channel (3), and wherein the pulsation damper (1) features a housing (2) and connecting pieces (21, 22), wherein the housing (2) features at least one hollow space (23) communicating with the flow channel (3) and in which at least one attenuator (4) is disposed which can be moved in axial direction so that the attenuator (4) can be moved during operation in axial direction, wherein the hollow space (23) and the attenuator (4) enclose the flow channel (3) coaxially, wherein the attenuator (4) is part of the flow channel (3) and the flow channel (3) features a substantially constant cross-sectional area, wherein the attenuator (4) consists of at least two segments (41) which are introduced one after the other in axial direction into the hollow space (23), wherein the attenuator (4) forms together with the connecting pieces (21, 22) a flow channel (3) for the fluid, wherein the flow channel (3) extends along a central axis of the attenuator (4), wherein the central axis is equal to the axis (a) of the housing (2), wherein the housing (2) encloses the attenuator (4) and the flow channel (3) coaxially, wherein the internal diameter Di of the cylindrical attenuator (4) is constant and corresponds to the internal diameter of the connecting pieces (21, 22) and the fluid-guiding duct.

2. Pulsation damper (1) according to claim 1, **characterized in that** an external diameter (Da, D1a, D2a) of the attenuator (4) is at least sectionwise substantially equal to a diameter of the hollow space (23).

3. Pulsation damper (1) according to one of the above claims, **characterized in that** the attenuator (4) is made of a material with high density, in particular metal, preferably steel.

4. Pulsation damper (1) according to one of the above claims, **characterized in that** a resilient element, in particular a spring-loaded element (6), is provided which exerts on the attenuator (4) a force in axial direction opposite to the direction of flow of the fluid.

5. Pulsation damper (1) according to one of the above claims, **characterized in that** a spacer (44) is provided in the hollow space (23) which ensures that a gap (5, 51) between the attenuator (4) and a wall delimiting the hollow space (23) in axial upstream direction is observed.

6. Pulsation damper (1) according to one of the above claims, **characterized in that** the hollow space (23) and the attenuator (4) feature a first section with a first external diameter (D3) and a second section with a second external diameter (D2a), wherein the second section is disposed downstream of the first section and the second external diameter (D2a) is smaller than the first external diameter (D3).

7. Pulsation damper (1) according to the above claim, **characterized in that** a width of a gap (53) formed between the first section of the attenuator (4) and a wall area delimiting the first section of the hollow space in axial direction is substantially equal to a width of a gap (52) formed between the second section of the attenuator (4) and a wall area delimiting the second section of the hollow space (23) in axial direction.

8. Oil module for the introduction into an oil circuit of an internal combustion engine, in particular of a motor vehicle, with at least one oil filter, **characterized in that** the oil module features at least one pulsation damper (1) according to one or several of the above claims.

9. Method for absorbing pressure pulsations of a fluid in a fluid duct, wherein a movable attenuator (4) is introduced into the fluid in such a way that hydraulic energy is transformed into kinetic energy and the kinetic energy into dissipation energy, wherein a pulsation damper (1) according to one of the above claims is used.

## Revendications

1. Amortisseur de pulsations (1) destiné à amortir des pulsations de pression d'un fluide dans une conduite de fluide, l'amortisseur de pulsations (1) étant introduit en tant qu'élément intermédiaire dans la conduite de fluide en formant un canal d'écoulement axial (3) et ledit amortisseur de pulsations (1) comportant un boîtier (2) et des pièces de raccord (21, 22), le boîtier (2) présentant au moins un espace creux (23) qui communique avec le canal d'écoulement (3) et dans lequel est disposé au moins un élément d'amortissement (4) qui peut être déplacé en sens axial de manière à ce que l'élément d'amortissement (4) puisse être déplacé, pendant la marche, en sens axial, l'espace creux (23) et l'élément d'amortissement (4) entourant le canal d'écoulement (3) en sens coaxial, l' élément d'amortissement (4) constituant une partie du canal d'écoulement (3) et le canal d'écoulement (3) présentant une section essentiellement constante, l'élément d'amortissement (4) étant constitué d'au moins deux segments (41) qui sont introduits l'un derrière l'autre, en sens axial, dans l'espace creux (23), l'élément d'amortissement (4) formant avec les pièces de raccord (21, 22) un canal d'écoulement (3) pour le fluide, le canal d'écoulement (3) évoluant le long d'un axe médian de l'élément d'amortissement (4), l'axe médian étant simultanément l'axe (a) du boîtier (2), le boîtier (2) entourant l'élément d'amortissement (4) et le canal d'écoulement (3) en sens coaxial, le diamètre intérieur Di de l'élément d'amortissement (4) cylindrique étant constant et correspondant au diamètre intérieur des pièces de raccord (21, 22) et de la conduite acheminant le fluide.

2. Amortisseur de pulsations (1) selon la revendication 1, **caractérisé en ce qu'**un diamètre extérieur (Da, D1a, D2a) de l'élément d'amortissement (4) est, au moins dans certaines sections, essentiellement identique au diamètre de l'espace creux (23).

3. Amortisseur de pulsations (1) selon l'une des revendications précédentes, **caractérisé en ce que** l'élément d'amortissement (4) est constitué d'un matériau avec une haute densité, en particulier de métal, de préférence d'acier.

4. Amortisseur de pulsations (1) selon l'une des revendications précédentes, **caractérisé en ce qu'**un élément élastique, en particulier un élément faisant ressort (6), est prévu, qui exerce une force en sens axial, dans le sens contraire au sens de flux du fluide, sur l'élément d'amortissement (4).

5. Amortisseur de pulsations (1) selon l'une des revendications précédentes, **caractérisé en ce qu'**un élément d'espacement (44) qui garantit qu'un espace (5, 51) soit ménagé entre l'élément d'amortissement (4) et une paroi limitant l'espace creux (23) en sens axial, en amont, est prévu dans l'espace creux (23).

6. Amortisseur de pulsations (1) selon l'une des revendications précédentes, **caractérisé en ce que** l'espace creux (23) et l'élément d'amortissement (4) comportent une première section avec un premier diamètre extérieur (D3) et une seconde section avec un second diamètre extérieur (D2a), la seconde section étant disposée en aval de la première section et le second diamètre extérieur (D2a) étant inférieur au premier diamètre extérieur (D3).

7. Amortisseur de pulsations (1) selon la revendication précédente, **caractérisé en ce qu'**une largeur d'une fente (53) formée entre la première section de l'élément d'amortissement (4) et une paroi délimitant la première section de l'espace creux en sens axial est essentiellement identique à une largeur d'une fente (52) formée entre la seconde section de l'élément d'amortissement (4) et une paroi délimitant la seconde section de l'espace creux (23) en sens axial.

8. Module de lubrification à monter dans un circuit d'huile d'un moteur à combustion interne, en particulier d'un véhicule automobile, avec au moins un filtre à huile, **caractérisé en ce que** le module de lubrification comporte au moins un amortisseur de pulsations (1) selon l'une ou plusieurs des revendications précédentes.

9. Procédé d'amortissement de pulsations de pression d'un fluide dans une conduite de fluide, un élément d'amortissement (4) mobile étant introduit dans le fluide de manière à ce que de l'énergie hydraulique soit transformée en énergie cinétique et que l'énergie cinétique soit transformée en énergie de dissipation, avec utilisation d'un amortisseur de pulsations (1) selon l'une des revendications précédentes.
